(19) **Europäisches Patentamt / European Patent Office / Office européen des brevets**

(11) **EP 1 495 533 B1**

(12) **EUROPEAN PATENT SPECIFICATION**

(45) Date of publication and mention
of the grant of the patent:
**11.03.2009 Bulletin 2009/11**

(51) Int Cl.:
**H02M 5/293** (2006.01)

(21) Application number: **03746857.6**

(22) Date of filing: **15.04.2003**

(86) International application number:
**PCT/GB2003/001633**

(87) International publication number:
**WO 2003/090337 (30.10.2003 Gazette 2003/44)**

(54) **POWER CONVERTER**

STROMUMSETZER

CONVERTISSEUR DE PUISSANCE

(84) Designated Contracting States:
**AT BE BG CH CY CZ DE DK EE ES FI FR GB GR HU IE IT LI LU MC NL PT RO SE SI SK TR**

(30) Priority: **15.04.2002 GB 0208600**

(43) Date of publication of application:
**12.01.2005 Bulletin 2005/02**

(73) Proprietor: **The University of Nottingham Nottingham NG7 2RD (GB)**

(72) Inventors:
- **WHEELER, Patrick**
  **University Park,**
  **Nottingham NG7 2RD (GB)**
- **CLARE, Jonathan**
  **University Park,**
  **Nottingham NG7 2RD (GB)**
- **EMPRINGHAM, Lee**
  **University Park,**
  **Nottingham NG7 2RD (GB)**

(74) Representative: **Fox-Male, Nicholas Vincent Humbert**
**Potter Clarkson LLP**
**Park View House**
**58 The Ropewalk**
**Nottingham**
**NG1 5DD (GB)**

(56) References cited:
| | |
|---|---|
| DE-A- 19 746 797 | US-A- 4 713 743 |
| US-A- 5 214 366 | US-A- 5 594 636 |
| US-A- 5 852 559 | US-A- 5 892 677 |

- **PATENT ABSTRACTS OF JAPAN vol. 1995, no. 11, 26 December 1995 (1995-12-26) & JP 07 213062 A (NIPPON ELECTRIC IND.), 11 August 1995 (1995-08-11)**
- **PATENT ABSTRACTS OF JAPAN vol. 1997, no. 03, 31 March 1997 (1997-03-31) & JP 08 289564 A (NIPPON ELECTRIC IND.), 1 November 1996 (1996-11-01)**
- **M. ZIEGLER: "Implementation of a two steps commutated matrix converter." IEEE, 1999, pages 175-180, XP010346891**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to power converters and to methods of power conversion.

There are numerous conventional arrangements for power conversion using matrices of bi-directional switches, for example as disclosed in US Patent Nos. 5,594,636 and 5,892,677 which involve four-step current commutation.

These arrangements employ a current commutation technique in which the command signals for each current direction in the bi-directional switch are staggered in such a way as to ensure the safe commutation of the current path between one bi-directional switch and the next.

According to the present invention there is provided a matrix converter as defined in Claim 1.

In this way, the commutation time for a converter is reduced compared to present conventional equipment. Such commutation times can be reduced to such levels as to approach or reach zero, and can even be slightly negative up to the total of the turn-off and turn-off delay times of the switching devices used. Thus, for example, the turn-off signal is sent to the out-going switch before sending the turn-on signal to the incoming switch, thereby to compensate for the long turn-off times of semi-conductor switching devices.

The initiation of one switch means may begin at any stage of the de-activation of the another switch means, for example at the start of such de-activation, or at some time during such de-activation, or at the end of such de-activation.

Preferably, the converter comprises one or more of the following features:-

- a first switch means and a second switch means whereby, in a first mode in use, the first switch means is activated, and the current commutation means is operable to activate the second switch means before the first switch means is de-activated.
- the converter comprises means to minimise the commutation interval.
- the converter comprises means to provide a commutation interval of less than those typically used as the Deadtime in a Voltage Source Inverter.
- the converter comprises means to provide a commutation interval which approaches or equals zero.
- the converter comprises means to provide a commutation interval which is slightly negative.
- the converter comprises means to provide a commutation interval which is negative up to the total turn-off times for the switching devices used in the circuit implementation.
- the converter comprises a plurality of switches and timers thereby to effect reduction of the commutation interval.

According to another aspect of the present invention, there is provided a method of operating a matrix converter as defined in Claim 7.

Preferably the method comprises one or more the following features:-

- operating the current commutation means in order to activate a second switch means before a first switch means is de-activated.
- minimising the commutation interval.
- providing commutation interval of less than those typically used as the Deadtime in a Voltage Source Inverter.
- providing a commutation interval which approaches or equals zero.
- providing a commutation interval which is slightly negative.
- providing a commutation interval which is negative up to the total turn-off times for the switching devices used in the circuit implementation
- operating a plurality of switches and timers thereby to effect reduction of the commutation interval.

According to another aspect of the present invention, there is provided a computer software product directly loadable into the internal memory of a digital computer, comprising software code portions for performing the steps of the method of the present invention when said product is run on a computer.

According to another aspect of the present invention, there is provided a computer program directly loadable into the internal memory of a digital computer, comprising software code portions for performing the method of the present invention when said program is run on a computer.

According to another aspect of the present invention, there is provided the computer program of the present invention on a carrier, which may comprise electronic signals.

The present invention is applicable to a wide range of configurations of bi-directional switches, but particularly common are matrix converters implementing the 2-step current commutation operation, the 3-step current commutation operation or the 4-step current commutation operation, based on the output current direction for each output phase of the converter. With the critical central commutation interval reduced to zero these two methods become 1-step and 3-step commutation techniques.

Specific applications for the converter, or the conversion method, of the present invention are electric vehicles and other electric motor control situations.

Advantages of the present invention include the reduction or elimination of commutation time, the possibility of eliminating the dc link capacitor, lower conduction losses, and higher conversion efficiency. Furthermore, another advantage may be to make the commutation time slightly negative to compensate for the long turn-off times associated with power semi-conductor switching devices.

The present invention can be implemented by hardware, software, firmware or any suitable combination of such technologies, or even appropriate alternative technologies.

Also it is possible to use digital logic applications e.g. transistors, discrete logic devices, programmable logic devices, direct outputs from first microprocessors, as alternatives to a FPGA.

The present invention is also applicable to the control of machines which operate without shaft sensors and need high-quality waveforms to operate properly at low speeds and at standstill, e.g. sensorless drives.

The present invention is also applicable to space critical drives (e..g vehicles and aerospace actuators) and integrated drives in which the converter and motor are in a single package.

In a modification, the output current direction for each output phase of the converter may be determined from the voltages seen across the bi-directional switches.

The present invention can effect phase-conversion with any number of input and output phase being possible, as long as each is greater than or equal to one; e.g. from three-phase to single-phase, or it can maintain the phase-relationship (e.g. three-phase to three-phase).

In order that the invention may more readily be understood, a description is now given, by way of example only, reference being made to the accompanying drawings, in which:-

Figure 1 is a schematic diagram of a converter of the present invention;
Figures 2A and 2B are a waveforms resulting from the converter of Figure 1;
Figure 3 shows the board layout of the converter of Figure 1;
Figures 4A and B show fibre optic components and edge connectors, respectively, of the converter of Figure 1;
Figure 5 shows the micro controller output of the converter of Figure 1;
Figure 6 shows the controller of the converter of Figure 1;
Figures 7 and 8 show the waveforms and switch arrangement for the four-step commutation process of the converter of Figure 1.

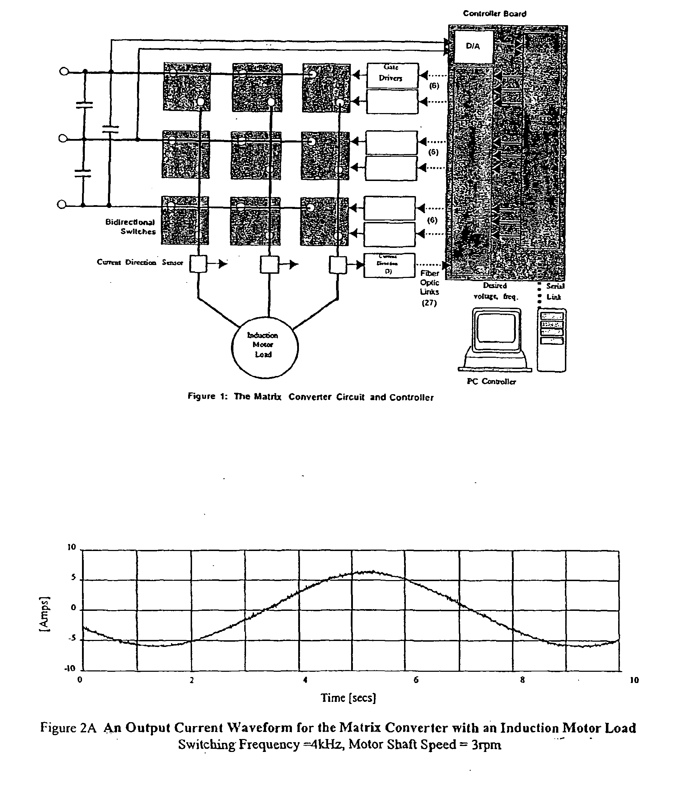

A snubblerless 10KVA Matrix Converter uses discrete 65Amp, 1200 Volt MOS Controlled Thyristors (MCTs) as shown in Figure 1. The commutation time is minimised in order to achieve the optimum waveform quality; this is particularly useful when controlling induction motors in applications where the controller may demand very low output voltages.

One application is in electric vehicle applications, primarily for motor control. In electric vehicles, especially military vehicles, weight and volume reduction are critical. Further, high-temperature operation is desirable to ease the problem of thermal management.

The matrix converter of the present invention can have significant advantages over the traditional dc link converter in all of these areas, since it is possible to eliminate the dc link capacitor. Previously, most matrix converters have been concerned with insulated-gate bipolar transistor (IBGT) switches.

The converter is controlled using a Venturini Control algorithm implemented on a simple micro controller.

A FPGA controls the current commutation process. This hardware control platform allows the commutation time, $T_B$, to be set by the user, with a minimum time of 100nsecs, which is very small compared to the switching time of the devices used (about 6usecs).

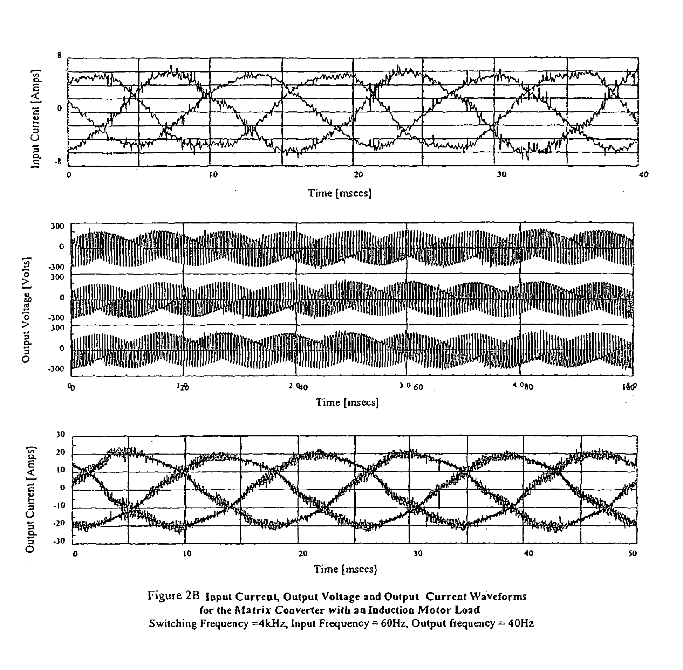

Figure 2B shows the Matrix Converter operating with an output frequency of 40Hz into a 11kW induction motor load. The input filter is formed with the inductance of the paralleling inductors of the variac which supplies converter and the 15us capacitors attached to the input power planes. The three-step current commutation strategy operates well, there being no output voltage spikes and no input current spikes which would be seen during a commutation error of failure. The output voltage waveform is very clean, the laminated bus bar structure of the input voltage power planes producing a very small voltage overshoot during the voltage transients.

If the commutation time is increased to 10 usecs, then at very low frequencies the output has a DC bias much larger than the AC current. This DC current is due to the commutation strategy deciding a current direction for each output leg of the converter when the converter has zero current flowing, for example at turn-on.

The distortion due to the long commutation time results in a large DC voltage in the chosen direction, leading to a very significant DC current.

The improved output current waveforms obtained with a commutation time of 100 nsecs can be seen in the quality of the output current shown in Figure 2A.

This result was obtained with the MCT Matrix Converter operating under closed loop vector control with a demand shaft speed of 3 rpm. It shows the high quality of waveform that may be obtained from the converter even with a very low output voltage demand.

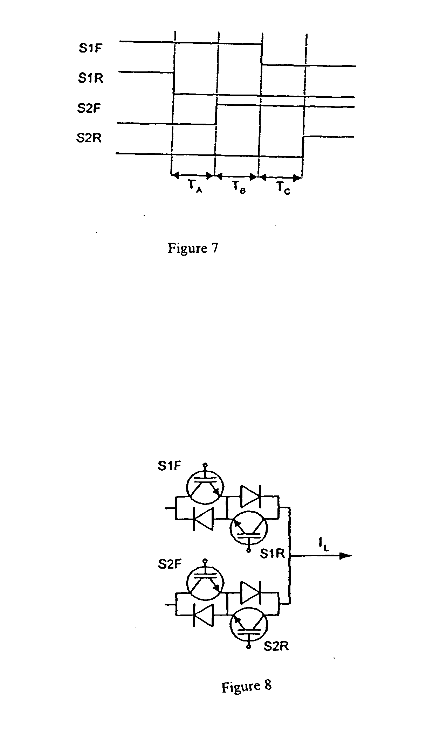

In the present invention, the critical commutation time, $t_B$ in Figure 7, for an MCT matrix converter is minimised towards, and to zero, and hence the output waveform quality can be substantially enhanced, particularly under conditions of low converter output voltage demand.

This is particularly important in applications such as vector-controlled induction motor drives, in which output current distortion can cause problems under low speed conditions. These techniques can be applied to a Matrix Converter utilizing any switching device where the turn-off delay is greater than the turn-on delay.

The four-step matrix converter driver and control board contains all necessary components to provide firing signals for a three-phase to single-phase matrix converter. The four step semi-soft commutation method is implemented using a single Field Programmable Gate Array (FPGA) with a structure of allowing all of the necessary control logic to be integrated into one IC. With the critical commutation time, $t_B$ effectively reduced to zero, this becomes a three-step commutation method.

Functions, such as timers, PWM generators and state machines, are used to create a stable commutation process. The timers are configurable and extremely versatile to allow use of a wide variety of semiconductor devices with different switching speeds. A docking port for a micro controller card is provided. Analogue receivers and conditioners are included for the necessary feedback signals. For convenience and noise immunity reasons, only one 5V supply is need for the board. All other necessary power supplies are generated locally.

**Board Layout**

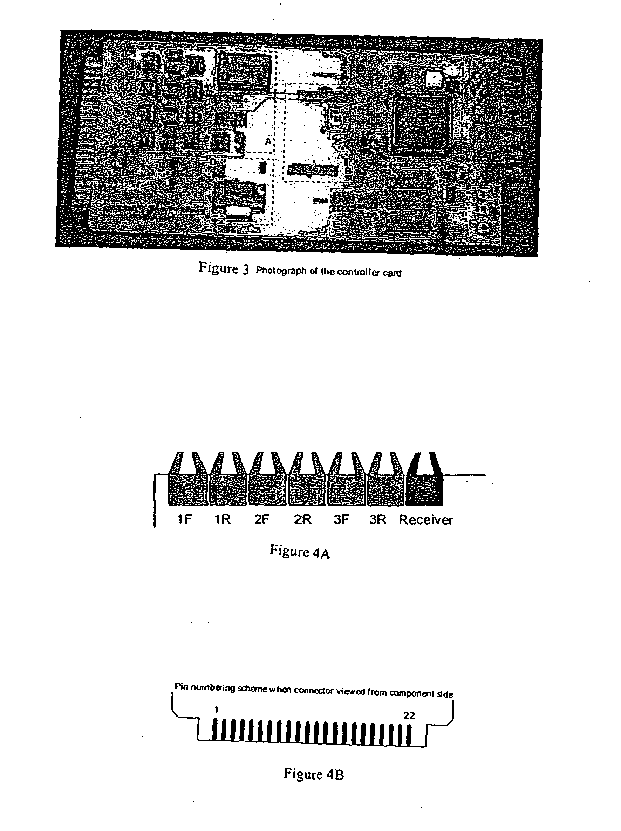

Figure 3 shows the board with the following elements:-

A: Analogue Circuitry Area: contains all of the analogue circuitry used for voltage and current measurement. The functions of this part are described in Section 3.

B: Micro Controller Port: this is the docking port for the micro controller card. The connections to this port are described in Section 4.4.

C: Current Direction Inputs: These are used by the FPGA Controller to determine the switching strategy during a current commutation. These are described more fully in Section 4.1.

D: Boot Loading Peripherals: The boot loading peripherals and some considerations are described in Section 4.2

E: Configuration DIP Switches: these are used to configure the various functions and the timers of the FPGA Controller, and are described in Section 5.1.

F: FPGA Controller: the controller provides an interface between the desired PWM output of the SAB 167 micro controller and the current commutation process. Many test modes have also been implemented for convenience. These modes and the operation of the FPGA controller are described in Section 5.

G: Edge Connector: The connections to the edge connector are described in Section 4.5.

H: Power Connector: Although power to the board can be applied using the edge connector, a power terminal block is provided for convenience. The board uses only one 5 volt supply. Any other voltages needed are generated on the board. The +5V terminal is the one nearest the analogue circuitry.

I: Push Buttons: Three push buttons are included for performing tasks that occur frequently. The two that are set close together are used for enabling and disabling the output of the FPGA controller during test mode operation. The one nearest the fibre optic receiver is used for enabling the outputs. The third push button is used to reset the micro controller.

J: Fibre Optic Outputs: The fibre optic outputs and their drivers are discussed in Section 4.3.

**Section 4: Analogue Circuits**

The analogue area of the board allows voltage and current inputs to be transformed so that the micro controller can sample them. High Impedance 15V differential inputs are provided to reduce conducted noise. This stage has a gain of 1/3. The next stage is an offset and gain stage. The micro controller can only sample positive voltages so an offset is used to move the input waveforms. The offset voltage for all stages is controlled by the potentiometer and the op-amp at the bottom right of the analogue circuit area. The final gain and offset are then fine-tuned by the variable resistors.

The upper resistor in each channel controls the gain and the lower controls the offset.

The micro-controller has only one integrated sample-and-hold channel since large amounts of silicon area are used up by these. These multiple voltages cannot be sampled at the same instant in time. For this reason, a dedicated sample-and-hold chip (Analog Device SMP04E) is included on the board.

The analogue-to-digital converter of the SAB 167 accepts inputs in the range of between 0-5V. For this range to be achieved, the Varef pin of the processor needs to be connected to the 5V rail. It has been found that noise on the 5V rail caused by the SAB167 is transferred to the sampled analogue data. For this reason, a stable 4V reference has been placed on the board. This then reduces the input range of the micro controller to 0-4V. The previously described circuitry is used to ensure the input voltage range is not exceeded.

The OP-Amps require supply voltages of +15V and the S/H integrated circuits uses +8V and -5V. All of these voltages are generated by the onboard DC-DC converter and the linear regulators from the 5V supply. This also makes the analogue circuitry more immune to digital noise.

### Section 4: Peripherals

### 4.1 Current Direction Inputs

The current direction information is used by the FPGA Controller to determine the firing sequence during a current commutation. The FPGA Controller has two current direction inputs that can be used. The first is connected to a fibre optic receiver (HFBR2521). The second is connected to an opto-coupler (HCPL2611). Connection to the opto-coupler is through an SMB connector with the anode of the opto-coupler connected to the centre pin.

The second current direction input is also wire-Ored to an auxiliary MOSFET and can be driven from the edge connector. The gate of the MOSFET is optimised for 5V signals. Only one of these signals is used for the commutation process. The signal that is used depends on the configuration DIP switches (see Section 5.1.1). The current direction signal can also be forced to a particular direction internally for testing purposes. The design of the FPGA controller ensures that there are no external filtering or latching requirements for the signal.

### 4.2 Boot-loader considerations

For convenience, a 9-way D-type connector is included on the board for pre-rack mounting testing. Only a standard serial port extension cable is required. The connections are such that no null modem wire swapping is required. The TQM 167LCD serial port lines are also connected to the edge connector for future use. The PC serial port lines RTS and DTR are used to reset and bootload the micro controller.

After bootloading, these lines can be toggled by the terminal program used to communicate with the micro controller causing a reset to occur. As a safety measure, two jumpers are used to break the connections of the RTS and DTR lines when not bootloading. Only the TxD and RxD lines are required to communicate with the micro controller during normal operations. If preferred, the connector on top of the TQM167LCD can be used. Care must then be taken with the RTS and DTR lines for the reasons outlined above.

### 4.3 Fibre Optic Drivers

The output gate drive fibre optic components (HFBR 1521) are driven by a series connection of a MOSFET, resistor and the opto diode. The MOSFET is directly driven by the FPGA controller. The polarity of the outputs (active high or active low) can be changed to suit the application (see Section 5.1.5). The fibre optic transmitter at the top of the board of Figure 3 is used for the forward device in commutation cell number 1 (1F), the next is for the reverse device (1R) and so on. This can be seen more clearly in Figure 4.

### 4.4 Micro Controller Port

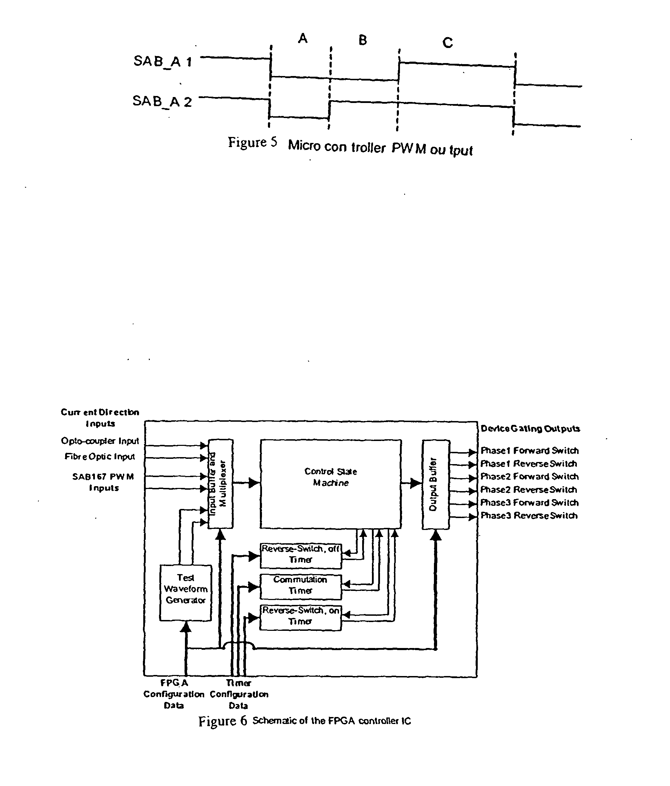

All of the necessary connections to the micro controller card are provided using the two connectors on the board. These connections include the analogue signal lines together with the analogue reference, the serial port lines and connections to the FPGA controller. Three lines are used to connect the SAB167 and the FPGA. One line is used as an enable line. The other two are used for the PWM demand. Figure 5 shows a typical PWM output period from the micro controller. The decoding of these signals into the three six output signals is done internally in the FPGA controller.

During period A, the outputs of commutation cell 1 are active, during B cell 2 is active and finally during C cell 3 is active. If the FPGA controller is set to use the SAB167 PWM inputs (i.e not using one of the test modes), the push button enable and disable push buttons are not active. Only the enable line from the SAB 167 is used to enable and disable the FPGA outputs. A line is also used for to trigger the sample and hold IC.

**Edge connector**

Table 1

| Pin Number | Usage | Pin Number | Usage |
|---|---|---|---|
| 1 | Analogue channel 1 +ve | 15 | 5V Power supply input |
| 2 | Analogue channel 1 -ve | 16 | 0V Power supply input |
| 3 | Analogue channel 2 +ve | 18 | Serial Port DTR |
| 4 | Analogue channel 2 -ve | 19 | Serial Port RTS |
| 5 | Analogue channel 3 +ve | 20 | Serial Port TxD |
| 6 | Analogue channel 3 -ve | 21 | Serial Port RxD |
| 7 | Analogue channel 4 +ve | 22 | AUX current direction input |
| 8 | Analogue channel 4 -ve | All Other | Not Used |

Figure 4B and Table 1 above show the connections to the edge connector. All connections are made to the underside of the edge connector with the exception of the power supply connections which are attached to both the underside and the component side.

**5. FPGA Controller**

Figure 6 shows a high level schematic of the FPGA controller. The FPGA acts an interface between the PWM demands of the micro controller and the output requirements of the commutation process. The output stage is controlled in such a way as to implement the standard 4-step semi-soft commutation strategy to avoid line to line short circuits or load open circuits. The FPGA contains all the necessary circuitry to implement the three necessary timers and the current direction input conditioning. Various test modes are also included for converter operation without the need to the micro controller using an internal PWM generator. These modes are described in Section 5.1.2. The FPGA is configured with the use of DIP switches on the board. The polarity of the output stage and the current direction inputs can be changed according to the desired application thus removing constraints on providing external inverters for interfacing.

**5.1 FPGA Configuration**

The DIP switches produce a logic 0 is switched to the "on" position and floats to a logic "1" if in the "off' position. Table 2 below shows the pin naming convention for the FPGA configuration DIP switches (labelled "Config" on the board).

Table 2

| Switch No. | 1 | 2 | 3 | 4 | 5 | 6 | 7 | 8 | 9 | 10 |
|---|---|---|---|---|---|---|---|---|---|---|
| Switch Name | Circonf1 | Circonf2 | Test1 | Test2 | Test3 | Testsp1 | Testsp2 | Globaldiv2 | Activeout | Activecin |

### 5.1.1 Cincon1, Cincon2

These two switches configure the current direction input. They are used to select either one of the current direction inputs described earlier or to force the current direction to one value or the other during testing. The current direction is defined as positive (logic 1) if it is flowing out of the converter from the utility to the load and negative if current is flowing into the converter from the load to the utility (logic 0). Table 3 below shows the operation of the switches.

Table 3

| Cinconf1 | Cinconf2 | Operation |
|----------|----------|-----------|
| 0 | 0 | CIN1 Selected (fibre optic) |
| 0 | 1 | CIN2 Selected (optocoupler/Aux) |
| 1 | 0 | Current direction forced to 0 |
| 1 | 1 | Current direction forced to 1 |

### 5.1.2 Test1, Test2, Test3

These three switches configure the mode of operation of the FPGA. Under normal operation the FPGA controller uses the PWM of the micro controller to derive the output waveforms. There are however various test modes to aid in the development process. These modes include a three phase commutation with a cells 1, 2 and 3 given a 25%, 25% and 50% duty cycle respectively. The test generator can also commutate between two desired phases with a 50% duty cycle. Table 4 below shows all of the possibilities.

Table 4

| Test1 | Test2 | Test3 | Operation |
|-------|-------|-------|-----------|
| 0 | 0 | 0 | SAB167 Controlled |
| 0 | 0 | 1 | 3 Phase Test mode |
| 0 | 1 | X | 2 phase commutate between cells I and 2 |
| 1 | 0 | X | 2 phase commutate between cells 2 and 3 |
| 1 | 1 | X | 2 phase commutate between cells 3 and 1 |
| NOTE: When the FPGA Controller is set to be controlled by the micro controller the push button enable and disable are not active. The outputs are enabled by the micro controller. | | | |

### 5.1.3 Testp1, Testp2

These switches control the switching frequency of the test mode PWM generator. Table 5 below shows the available combinations.

Table 5

| Testsp1 | Testsp2 | Frequency |
|---------|---------|-----------|
| 0 | 0 | 5 kHz |
| 0 | 1 | 2.5 kHz |
| 1 | 0 | 1.25 kHz |
| 1 | 1 | 625 Hz |

### 5.1.4 Globaldiv2

This switch is used when longer delays are required. All internal timer clocks are halved in frequency when this is set to 0. Normal system clock speed is used when set to 1. This will be described more fully in section 5.2

### 5.1.5 Activein, Activeout

The activein and activeout switches control the polarity of the outputs and the CIN inputs. If activeout is set to 1, a 1 will appear at the output of the FPGA (the fibre optic transmitter will be driven) when a device should be turned on. The reverse is true if the switch is set to 0.

As mentioned earlier a positive current (flowing from utility to load) is internally represented by a logic 1. This can be inverted inside the FPGA so that the designer need not worry about signal polarity when designing the current direction detection circuitry. If activein is set to logic 1, it is assumed that a logic 1 on the input to the FPGA is positive current (i.e active high). If the activein is set to 0 then a 0 at the input to the FPGA will mean positive current flow (i.e current direction is then active low). Any inversion due to the on board current direction receiving components also need to be taken into consideration. Setting activecin to either value will not affect the direction value if the current direction is forced using one of the test modes.

### 5.2 Timer Configuration

Figure 7 shows the output waveforms achieved by the switches shown in Figure 8 for the commutation from cell 1 to switch cell 2 assuming the current to be in the direction shown. The times marked $T_A$, $T_B$ and $T_C$ are defined as the "reverse switch off time", the "commutation time" and the "reverse switch on time" respectively. Each of these delays has its own configurable timer. Each of the three DIP switches are identical and control one timer each. The "reverse switch off time" timer is marked "R-off' on the board, the "commutation time" timer is marked "Comm" and the "reverse switch on time" timer is marked "R-on". Since each of the timer configuration settings are identical, only one will be described. Table 6 shows the switch usage for the commutation timer.

Table 6

| Switch No. | Switch Name | Switch No. | Switch Name |
|---|---|---|---|
| I | CommDiv1 | 6 | CommDIP5 |
| 2 | CommDiv0 | 7 | CommDIP4 |
| 3 | Not Used | 8 | CommDIP3 |
| 4 | CommDIP7 | 9 | CommDIP2 |
| 5 | CommDIP6 | 10 | CommDIP1 |

The switches labelled "CommDIP1-7" form the input to a 7-bit binary counter, CommDIP1 being the "least significant bit" and CommDIP7 being the "most significant bit". The timer counts up to the value specified on the CommDIP switches before resetting to create the variable delay required. The switches labelled CommDIV0-1 are used to dictate the input clock speed into the timer. Table 7 below shows all available clock periods assuming 10MHz clock is used to clock the FPGA controller.

Table 7

| CommDIV1 | CommDIV0 | Period |
|---|---|---|
| 0 | 0 | 100 ns |
| 0 | 1 | 200 ns |
| 1 | 0 | 400 ns |
| 1 | 1 | 800 ns |

If the Globaldiv2 input is set to 0, these times are doubled for all timers. The timer time is calculated by multiplying the selected clock period by the binary number set on the CommDIP switches (remembering that a logic 0 is produced when the switch is on and a 1 when off when setting the DIP switches) and then adding one FPGA clock period (100ns for the 10MHZ clock). For example, if the timer was to be set to its maximum value (Globaldiv2 is also set to 0 to double the delay), all seven bits set to high on the CommDIP switches will cause a maximum count of 127, this multiplied by a period of $1.6\mu$ gives $203.2\mu$s plus 100ns gives a maximum delay of $203.3\mu$s. If the CommDIP switches are all set to zero, then the timer delay is set to 100ns. This wide range of timer values makes the FPGA controller suitable for most types of semiconductor switching devices. The "reverse off' and "reverse on" timers are configured in the same way.

'reverse off timer'

| Switch No. | Switch Name | Switch No. | Switch Name |
|---|---|---|---|
| 1 | R-offDIV1 | 6 | R-offDIP5 |
| 2 | R-offDIV0 | 7 | R-offDIP4 |
| 3 | Not Used | 8 | R-offDIP3 |
| 4 | R-offDIP7 | 9 | R-offDIP2 |
| 5 | R-offDIP6 | 10 | R-offDIP1 |

Table 8

| Switch No. | Switch Name | Switch No. | Switch Name |
|---|---|---|---|
| 1 | R-onDIV1 | 6 | R-onDIP5 |
| 2 | R-onDIV0 | 7 | R-onDIP4 |
| 3 | Not Used | 8 | R-onDIP3 |
| 4 | R-onDIP7 | 9 | R-onDIP2 |
| 5 | R-onDIP6 | 10 | R-onDIP1 |
| 'reverse on timer' | | | |

The formula below can be used to calculate timer periods where:-

DIP represents the binary number on the DIP switches (DIP1 = LSB, DIP7 = MSB).
DIV represents the binary number on the DIV0 and DIV 1 switches (DIV0 = LSB, DIV1 = MSB).
CLK is the global clock period, normally 100ns but if Globaldiv2 is set to 0 CLK = 200ns.

$$\text{Timer Period} = \left(CLK \times 2^{DIV} \times DIP\right) + 100ns$$

Example: If CLK = 100ns, DIV0 are DIV1 are both set to 1 and 45 is set on the DIP switches, the resulting timer period would be,

$$\left(100ns \times 2^{3} \times 45\right) + 100ns = 36.1\mu s$$

Table 9

| Pin Num ber | Pin Use | Pin Number | Pin Use |
|---|---|---|---|
| 1 | DEBUG_PIN | 43 | VCC |
| 2 | PWR-RESET | 44 | R-off DIP3 |
| 3 | SAB-A1 | 45 | R-off DIP2 |
| 4 | Reserved for Future Use | 46 | R-off DIP3 |
| 5 | SAB-A2 | 47 | R-on DIP1 |
| 6 | GND | 48 | R-on DI P2 |
| 7 | SAB-ENABLE | 49 | GND |
| 8 | Reserved for Future Use | 50 | R-off DIP2 |

(continued)

| Pin Num ber | Pin Use | Pin Number | Pin Use |
|---|---|---|---|
| 9 | CINconf1 | 51 | EXT -Disable |
| 10 | TEST1 | 52 | R-off DIP1 |
| 11 | CINconf2 | 53 | Reserved for Future Use |
| 12 | GND | 54 | CIN-LED |
| 13 | TEST2 | 55 | EXT -Enable |
| 14 | TEST 3 | 56 | ENABLE-LED |
| 15 | TEST-SP1 | 57 | CIN2 (opto/AUX) |
| 16 | TEST-SP2 | 58 | Reserved for Future Use |
| 17 | Global-DIV2 | 59 | R-off DIP1 |
| 18 | active-cut | 60 | Reserved for Future Use |
| 19 | active-cin | 61 | Reserved for Future Use |
| 20 | R-on DIV1 | 62 | Reserved for Future Use |
| 21 | Reserved for Future Use | 63 | GND |
| 22 | VCC | 64 | VCC |
| 23 | VCC | 65 | VCC |
| 24 | R-offDIV1 | 66 | CIN1 |
| 25 | R-off DIV1 | 67 | Reserved for Future Use |
| 26 | R-on DIV0 | 68 | Reserved for Future Use |
| 27 | R-off DIV0 | 69 | Reserved for Future Use |
| 28 | GNU | 70 | GND |
| 29 | R-off DIP7 | 71 | 3R |
| 30 | R-off DIV0 | 72 | 3F |
| 31 | R-off DIP7 | 73 | 2R |
| 32 | R-on DIP7 | 74 | 2F |
| 33 | R-on DIP6 | 75 | 1F |
| 34 | R-off DIP6 | 76 | 1R |
| 35 | R-off DIP6 | 77 | Reserved for Future Use |
| 36 | R-off DIP5 | 78 | Reeved for Future Use |
| 37 | R-on DIP5 | 79 | Reserved for Future Use |
| 38 | R-on DI P4 | 80 | Reserved for Future Use |
| 39 | R-off DIP5 | 81 | Reserved for Future Use |
| 40 | R-off DIP4 | 82 | Reserved for Future Use |
| 41 | R-off DIP4 | 83 | CLK |
| 42 | R-on DIP3 | 84 | VCC |

Table 10 gives FPGA pin definitions

**Timer DIP Switch Setting Examples**

Table 11 below gives some examples of possible timer DIP switch settings and their resultant delay times.

Table 11

| Globaldiv2 | DIV1 | DIV0 | DIP | | | | | | | DELAY |
|---|---|---|---|---|---|---|---|---|---|---|
| | | | 7 | 6 | 5 | 4 | 3 | 2 | 1 | |
| 1 | 0 | 0 | 0 | 0 | 0 | 0 | 0 | 0 | 0 | 100ns |
| 1 | 0 | 0 | 0 | 0 | 0 | 0 | 1 | 0 | 0 | 500ns |
| 1 | 0 | 0 | 0 | 0 | 0 | 1 | 0 | 0 | 1 | 1μs |
| 1 | 0 | 1 | 0 | 0 | 0 | 0 | 1 | 0 | 0 | 900ns |
| 1 | 0 | 1 | 0 | 0 | 0 | 1 | 0 | 1 | 0 | 2.1μs |
| 1 | 1 | 0 | 0 | 1 | 1 | 0 | 0 | 1 | 0 | 20.1μs |
| 1 | 1 | 0 | 1 | 1 | 1 | 1 | 1 | 1 | 1 | 50.9μs |
| 1 | 1 | 1 | 0 | 0 | 0 | 1 | 0 | 0 | 0 | 6.5μs |
| 1 | 1 | 1 | 1 | 0 | 0 | 0 | 0 | 0 | 0 | 51.3 |
| 0 | 0 | 0 | 0 | 0 | 0 | 0 | 1 | 0 | 0 | 900ns |
| 0 | 0 | 0 | 0 | 0 | 0 | 1 | 0 | 0 | 1 | 1.9μs |
| 0 | 0 | 1 | 0 | 0 | 0 | 0 | 1 | 0 | 0 | 1.7μs |
| 0 | 0 | 1 | 0 | 0 | 0 | 1 | 0 | 1 | 0 | 4.1μs |
| 0 | 1 | 0 | 0 | 1 | 1 | 0 | 0 | | 0 | 40.1μs |
| 0 | 1 | 0 | 1 | 1 | 1 | 1 | 1 | 1 | 1 | 101.7μs |
| 0 | 1 | 1 | 0 | 0 | 0 | 1 | 0 | 0 | 0 | 12.9μs |
| 0 | 1 | 1 | 1 | 0 | 0 | 0 | 0 | 0 | 0 | 102.5 |
| 0 | 1 | 1 | 1 | 1 | 1 | 1 | 1 | 1 | 1 | 203.3 |

The switch names used are general since they can be applied to any of the three timers.

**Claims**

1.  A matrix converter comprising current commutation circuitry with a plurality of power semiconductor bi-directional switches (E) arranged in a matrix configuration, **characterised in that** said matrix switch arrangement performing timing/delay operations effecting commutation functions with initiation of one switch before de-activation of another switch wherein the matrix switch arrangement provides a commutation interval which approaches or equals zero.

2.  A converter according to Claim 1 wherein the matrix witch arrangement (E) comprises timer/delay operations of the power semiconductor bi-directional switches according to any one or more of Tables 6 to 11.

3.  A converter according to Claim 1 or 2 wherein the matrix switch arrangement (E) comprises a first switch and a second switch whereby, in a first mode in use, the first switch is activated and the second switch is not activated, and the matrix switch arrangements performs timing/delay operations which activates the second switch before the first switch is de-activated.

4.  A converter according to any preceding claim wherein the matrix switch arrangement (E) comprises circuitry performing timing/delay operations of the switches to minimise the commutation interval.

5.  A converter according to any preceding claim wherein the matrix switch arrangement (E) comprises circuitry performing timing/delay operations of the switches to provide a commutation interval of less than those typically used as a deadtime in a Voltage Source Inverter.

6. A converter according to any preceding claim wherein the matrix switch arrangement (E) comprises circuitry performing timing/delay operations of the switches to provide a commutation interval which is negative.

7. A method of operating a matrix converter having a plurality of power semi-conductor bi-directional switches (E) arranged in a matrix configuration, the method comprising operating said matrix switch arrangement to perform timing/delay operations effecting commutation functions with activation of one switch before de-activation of another switch wherein a commutation interval approaches or equals zero.

8. A method according to Claim 7 comprising the matrix switch arrangement (E) performing liming/delay operations of the power semiconductor bi-directional switches according to one or more of Tables 6 to 11.

9. A method according to Claim 7 or 8 wherein, in a first mode in use, the first switch is activated and the second switch is not activated, and then the matrix switch arrangement activates the second switch before the first switch is de-activated.

10. A method according to any of Claims 7 to 9 wherein the matrix switch arrangement (E) performs timing delay operations on the switch thereby minimizing the commutation interval.

11. A method according to Claims 7 to 10 wherein the matrix switch arrangement (E) performs timing delay operations on the switch thereby providing a commutation interval of less than those typically used as deadtime in a Voltage Source Inverter.

12. A method according to any of Claims 7 to 11 wherein the matrix switch arrangement (E) performs timing/delay operations on the switch thereby providing a commutation interval which is negative.

13. A method according to any of Claims 7 to 12 wherein the matrix switch arrangement (B) performs timing/delay operations on the switch thereby thereby to effect reduction of the commutation interval.

14. A computer program product directly loadable into the internal memory of a digital computer, comprising software code portions for performing the method of Claim 7 to 13 when said product is run on a computer.

15. A computer program directly loadable into the internal memory of a digital computer, comprising a software code portions for performing the method of Claim 7 to 13 when said program is run a computer.

16. A computer program of Claim 14 on a carrier, which may comprise electronic signals.

**Patentansprüche**

1. Matrixwandler mit einer Strom-Kommutations-Schaltung mit einer Mehrzahl von bi-direktionalen Leistungshalbleiterschaltern (E), die in einer Matrixkonfiguration angeordnet sind, **dadurch gekennzeichnet, dass** die Matrixschalteranordnung Zeitsteuerungs/Verzögerungs-Betriebe zur Durchführung von Kommutationsfunktionen mit der Initiation eines Schalters vor der Deaktivierung eines anderen Schalters durchführt, wobei die Matrixschalteranordnung ein Kommutationsintervall bereitstellt, das gleich oder annähernd gleich Null ist.

2. Wandler nach Anspruch 1, bei dem die Matrixschalteranordnung (E) Zeitsteuerungs/Verzögerungs-Betriebe der bi-direktionalen Leistungshalbleiterschalter entsprechend einer oder mehrerer der Tabellen 6 bis 11 umfasst.

3. Wandler nach Anspruch 1 oder 2, bei dem die Matrixschalteranordnung (E) einen ersten Schalter und einen zweiten Schalter umfasst, wobei in einem ersten Betriebsmodus der erste Schalter aktiviert und der zweite Schalter nicht aktiviert ist, und wobei die Matrixschalteranordnung Zeitsteuerungs/Verzögerungs-Betriebe mit der Aktivierung des zweiten Schalters vor der Deaktivierung des ersten Schalters durchführt.

4. Wandler nach einem der vorangehenden Ansprüche, bei dem die Matrixschalteranordnung (E) eine Schaltung umfasst, die Zeitsteuerungs/Verzögerungs-Betriebe der Schalter durchführt, um das Kommutationsintervall zu minimieren.

5. Wandler nach einem der vorangehenden Ansprüche, bei dem die Matrixschalteranordnung (E) eine Schaltung umfasst, die Zeitsteuerungs/Verzögerungs-Betriebe der Schalter durchführt, um ein Kommutationsintervall bereitzustellen, das kleiner als die üblicherweise, als Tatzeit in einem Spannungsquelleninverter verwendete ist.

6. Wandler nach einem der vorangehenden Ansprüche, bei dem die Matrixschalteranordnung (E) eine Schaltung umfasst, die Zeitsteuerungs/Verzögerungs-Betriebe der Schalter durchführt, um ein Kommutationsintervall bereitzustellen, das Negativ ist.

7. Verfahren zum Betreiben eines Matrixkonverters mit einer Mehrzahl von bi-direktionalen Leistungshalbleiterschaltern (E), die in einer Matrixkonfiguration angeordnet sind, wobei das Verfahren umfasst: Betreiben der Matrixschalteranordnung zur Durchführung von Zeitsteuerungs/Verzögerungs-Betrieben zur Ausführung von Kommutationsfunktionen mit einer Aktivierung eines Schalters vor der Deaktivierung eines anderen Schalters, wobei ein Kommutationsintervall gleich oder nahe bei Null ist.

8. Verfahren nach Anspruch 7 mit der Matrixschalteranordnung (E) zur Durchführung der Zeitsteuerungs/Verzögerungs-Betriebe der bi-direktionalen Leitungshalbleiterschalter entsprechend einer oder mehrere der Tabellen 6 bis 11.

9. Verfahren nach Anspruch 7 oder 8, bei dem in einem ersten Betriebsmodus der erste Schalter aktiviert und der zweite Schalter nicht aktiviert ist, und dann die Matrixschalteranordnung den zweiten Schalter aktiviert, bevor der erste Schalter deaktiviert wird.

10. Verfahren nach einem der Ansprüche 7 bis 9, bei dem die Matrixschalteranordnung (E) Zeitsteuerungs/Verzögerungs-Betriebe der Schalter durchführt, um so dass Kommutationsintervall zu minimieren.

11. Verfahren nach einem der Ansprüche 7 bis 10, bei dem die Matrixschalteranordnung (E) Zeitsteuerungs/Verzögerungs-Betriebe des Schalters durchführt, wodurch ein Kommutationsintervall bereit gestellt wird, das kleiner als die üblicherweise als Tatzeit in einem Spannungsquelleninverter verwendet ist.

12. Verfahren nach einem der Ansprüche 7 bis 11, bei dem die Matrixschalteranordnung (E) Zeitsteuerungs/Verzögerungs-Betriebe des Schalters durchführt, wodurch ein Kommutationsintervall bereitgestellt wird, das Negativ ist.

13. Verfahren nach einem der Ansprüche 7 bis 12, bei dem die Matrixschalteranordnung (E) Zeitsteuerungs/Verzögerungs-Betriebe an dem Schalter durchführt, wodurch eine Verringerung des Kommutationsintervalls erzielt wird.

14. Computerprogrammprodukt, das direkt in den internen Speicher eines digitalen Computers ladbar ist, mit Softwarecodeabschnitten zur Durchführung des Verfahrens nach Anspruch 7 bis 13, wenn das Produkt auf einem Computer läuft.

15. Computerprogramm, das direkt in den internen Speicher eines digitalen Computers ladbar ist, mit Softwarecodeabschnitten zur Durchführung des Verfahrens nach Anspruch 7 bis 13, wenn das Programm auf einem Computer läuft.

16. Computerprogramm nach Anspruch 14 auf einem Träger, der elektronische Signale umfassen kann.

**Revendications**

1. Convertisseur de matrice comprenant un circuit de commutation de courant avec une pluralité de commutateurs bidirectionnels à semi-conducteur de puissance (E) agencés dans une configuration de matrice, **caractérisé en ce que** ledit agencement de commutateur en matrice exécute des opérations de minutage/délai effectuant des fonctions de commutation avec l'activation d'un commutateur avant la désactivation d'un autre commutateur dans lequel l'agencement de commutateur en matrice fournit un intervalle de commutation qui se rapproche de ou est égal à zéro.

2. Convertisseur selon la revendication 1, dans lequel l'agencement de commutateur en matrice (E) comprend des opérations de minutage/délai des commutateurs bidirectionnels à semi-conducteur de puissance selon une ou plusieurs des tables 6 à 11.

3. Convertisseur selon la revendication 1 ou 2, dans lequel l'agencement de commutateur en matrice (E) comprend un premier commutateur et un second commutateur moyennant quoi, dans un premier mode durant l'utilisation, le premier commutateur est activé et le second commutateur n'est pas activé, et l'agencement de commutateur en matrice exécute des opérations de minutage/délai qui activent le second commutateur avant que le premier commutateur ne soit désactivé.

4. Convertisseur selon une quelconque revendication précédente, dans lequel l'agencement de commutateur en matrice (E) comprend un circuit exécutant des opérations de minutage/délai des commutateurs pour minimiser l'intervalle de commutation.

5. Convertisseur selon une quelconque revendication précédente, dans lequel l'agencement de commutateur en matrice (E) comprend un circuit exécutant des opérations de minutage/délai des commutateurs pour fournir un intervalle de commutation inférieur à ceux utilisés d'habitude en tant que temps mort dans un onduleur de source de tension.

6. Convertisseur selon une quelconque revendication précédente, dans lequel l'agencement de commutateur en matrice (E) comprend un circuit exécutant des opérations de minutage/délai des commutateurs pour fournir un intervalle de commutation qui est négatif.

7. Procédé de fonctionnement d'un convertisseur de matrice possédant une pluralité de commutateurs bidirectionnels à semi-conducteur de puissance (E) agencés dans une configuration de matrice, le procédé comprenant l'étape consistant à faire fonctionner ledit agencement de commutateur en matrice pour exécuter des opérations de minutage/délai effectuant des fonctions de commutation avec l'activation d'un commutateur avant la désactivation d'un autre commutateur dans lequel un intervalle de commutation se rapproche de ou est égal à zéro.

8. Procédé selon la revendication 7, comprenant l'agencement de commutateur en matrice (E) exécutant des opérations de minutage/délai des commutateurs bidirectionnels à semi-conducteur de puissance selon une ou plusieurs des tables 6 à 11.

9. Procédé selon la revendication 7 ou 8, dans lequel, dans un premier mode durant l'utilisation, le premier commutateur est activé et le second commutateur n'est pas activé, et puis l'agencement de commutateur en matrice active le second commutateur avant que le premier commutateur ne soit désactivé.

10. Procédé selon l'une quelconque des revendications 7 à 9, dans lequel l'agencement de commutateur en matrice (E) exécute des opérations de minutage/délai sur le commutateur minimisant ainsi l'intervalle de commutation.

11. Procédé selon l'une quelconque des revendications 7 à 10, dans lequel l'agencement de commutateur en matrice (E) exécute des opérations de minutage/délai sur le commutateur fournissant ainsi un intervalle de commutation inférieur à ceux utilisés d'habitude en tant que temps mort dans un onduleur de source de tension.

12. Procédé selon l'une quelconque des revendications 7 à 11, dans lequel l'agencement de commutateur en matrice (E) exécute des opérations de minutage/délai sur le commutateur fournissant ainsi un intervalle de commutation qui est négatif.

13. Procédé selon l'une quelconque des revendications 7 à 12, dans lequel l'agencement de commutateur en matrice (E) exécute des opérations de minutage/délai sur le commutateur pour ainsi effectuer une réduction de l'intervalle de commutation.

14. Produit-programme informatique directement chargeable dans la mémoire interne d'un ordinateur numérique, comprenant des parties de code de logiciel pour réaliser le procédé selon les revendications 7 à 13 lorsque ledit produit est exécuté sur un ordinateur.

15. Programme informatique directement chargeable dans la mémoire interne d'un ordinateur numérique, comprenant des parties de code de logiciel pour réaliser le procédé selon les revendications 7 à 13 lorsque ledit programme est exécuté sur un ordinateur.

16. Programme informatique de la revendication 14 sur un support, qui peut comprendre des signaux électroniques.

Figure 1: The Matrix Converter Circuit and Controller

Time [secs]

Figure 2A An Output Current Waveform for the Matrix Converter with an Induction Motor Load
Switching Frequency =4kHz, Motor Shaft Speed = 3rpm

Figure 2B  Input Current, Output Voltage and Output Current Waveforms
for the Matrix Converter with an Induction Motor Load
Switching Frequency =4kHz, Input Frequency = 60Hz, Output frequency = 40Hz

Figure 3 Photograph of the controller card

| 1F | 1R | 2F | 2R | 3F | 3R | Receiver |

Figure 4A

Pin numbering scheme when connector viewed from component side

1                                                            22

Figure 4B

Figure 5   Micro con troller PW M ou tput

Figure 6 Schematic of the FPGA controller IC

S1F

S1R

S2F

S2R

$T_A$  $T_B$  $T_C$

Figure 7

S1F

S2F

$I_L$

S1R

S2R

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5594636 A
- US 5892677 A